# EUROPÄISCHE PATENTSCHRIFT

(11) **EP 3 741 606 B1**
(45) Veröffentlichungstag und Bekanntmachung des Hinweises auf die Patenterteilung: **20.04.2022**
(21) Anmeldenummer: 19176358.0
(22) Anmeldetag: 24.05.2019
(51) Int. Cl.: B60L 5/04, B60L 5/39, B60M 1/28, B60M 1/30, G05B 19/042, B65G 43/02

(54) **VORRICHTUNG UND VERFAHREN ZUR VERSCHLEISSERKENNUNG EINES FÖRDERSYSTEMS MIT GLEITKONTAKTEN**
DEVICE AND METHOD FOR DETECTING WEAR ON A CONVEYING SYSTEM WITH SLIDING CONTACTS
DISPOSITIF ET PROCÉDÉ DE DÉTECTION DE L'USURE D'UN SYSTÈME DE TRANSPORT POURVU DE CONTACTS GLISSANTS

(43) Veröffentlichungstag der Anmeldung: 25.11.2020
(73) Patentinhaber: Siemens Aktiengesellschaft, 80333 München (DE)
(72) Erfinder: KÖNIG, Frank, 44879 Bochum (DE)
(74) Vertreter: Siemens Patent Attorneys

(56) Entgegenhaltungen:
- EP-A1- 2 325 656
- DE-A1-102017 214 418
- JP-A- H03 261 303
- JP-A- 2016 192 863

## Beschreibung

Die vorliegende Erfindung betrifft Fördersysteme welche einen Gleitkontakt aufweisen, insbesondere Flughafen-Gepäckfördersysteme.

Fördersysteme mit Gleitkontakten weisen Abnutzungsteile (Stromversorgungsschienen, Stromabnehmer, Kohlebürste, ...) mit beschränkter Lebensdauer auf, die abhängig ist von unterschiedlichen Faktoren wie beispielsweise Verwendungszeit, Belastungsstärke, Luftfeuchtigkeit, Ablagerungen, Fremdkörper, Korrosion.

Der Stromabnehmer des Gleitkontakts steht während der Fahrt seines Fahrzeugs in ständiger schleifender Berührung mit der Stromschiene des Gleitkontakts. Sowohl der Stromabnehmer, insbesondere seine Kohlebürste, als auch die Stromschiene verschleißen durch Reibung. Stromabnehmer und Stromschiene müssen daher regelmäßig erneuert werden. Da ein Wechsel von Stromschienen mit erheblichem Aufwand verbunden ist, wird meist für die Kohlebürste ein weicheres Material gewählt, damit der Verschleiß des Stromabnehmers höher ist und die Stromschiene geschont wird.

In Flughafen-Gepäckfördersystemen werden Stromschienen-Stromabnehmer-Fördersysteme herangezogen, um die neue Generation von Gepäcksortern oder Early-Baggage-Storage (EBS) Shuttlen anzutreiben.

Es ist das Ziel jedes Flughafens, Ausfälle von Gepäckhandhabungssystemen soweit wie möglich zu reduzieren. Gepäckhandhabungssysteme weisen häufig Stromschienen und Stromabnehmer umfassende Gleitkontakte auf. Also wird während des Betriebs das System 'lebendig' gehalten und während Nicht-Betriebsstunden wird eine zeitbasierte Instandhaltung durchgeführt. SCADA (Supervisory Control and Data Acquisition) Systeme werden in Flughäfen häufig für Statusüberwachung von Gepäckhandhabungssystemen herangezogen. SCADA ermöglicht, den Betriebszustand des gesamten Fördersystems zu überwachen. SCADA kann Taten initiieren, wenn Teile des Fördersystems für Gepäckhandhabungsprozess nicht verfügbar werden. Kleinere Störungen wie Gepäck-Blockierungen oder Staus können innerhalb von Minuten behoben werden und ermöglichen eine Rückgabe des betroffenen Abschnitts an den normalen Betrieb. Jedoch können von Abnutzung verursachte Ausfälle von Komponenten wie Gleitkontakten nicht immer ohne Auswirkungen auf die Verfügbarkeit und Kapazität des gesamten Systems behoben werden. Diese Ausfälle können bedeutende, mit hohen Kosten verbundene Probleme für den Flughafen und Systembediener werden. Es ist deshalb wesentlich, Ausfälle von Komponente vorherzusagen, zu lösen und zu vermeiden.

Stromschienen und Stromabnehmer sind als Abnutzungsteile im Dauergebrauch, ein Sortierer läuft typischerweise 7 Tage pro Woche 18 Stunden täglich. Die Restnutzungsdauer kann durch Zählen von Betriebsstunden geschätzt werden. Allerdings reflektiert diese Schätzung nicht notwendigerweise den tatsächlichen Zustand der Abnutzungsteile. Einerseits beeinflusst der Zustand der Stromschiene den Zustand der Kohlebürste und umgekehrt. Weitere die Lebensdauer negativ beeinflussende Ursachen für Ausfallzeiten sind fehlerhaft ausgerichtete Verbindungen, Voralterungen, Fremdkörper, ....

Die Umgebungs- und somit Betriebsbedingungen des Fördersystems haben einen Einfluss auf sowohl die Leistung, als auch die Lebensdauer der Kohlebürste. Feuchtigkeit hat einen großen Einfluss auf den Reibungskoeffizienten der Kohlebürste, einer der Hauptparameter für ihre Leistung. Bei idealen Bedingungen bildet sich eine Mischung aus Graphit, Metalloxiden und Luftfeuchtigkeit als Film auf der Oberfläche der Stromschiene (bus bar) wodurch der Reibungskoeffizient und damit die Abnutzung reduziert wird. Wenn die Luft zu trocken für die Entwicklung eines solchen Films ist, werden spezielle Bürstenbehandlungen empfohlen. Heiße Atmosphären und übersättigte Luftfeuchtigkeit beeinflussen die Bürstenleistung negativ. Die Bürsten tendieren dazu, zuviel Film zu bilden, wodurch der Film im weiteren Verlauf lückenhaft wird und sich Rillen bilden können. Bei sich ändernden Bedingungen und externen Faktoren (Verunreinigungen, ungleichmässige Belastung) ist eine Schätzung der Lebensdauer anhand der Laufzeit nicht mehr akkurat möglich. Es kann entweder eine vorbeugende Wartung erfolgen oder aber die Systeme werden erst bei Ausfall gewartet. Alternativ kann der Zustand der Abnutzungskomponenten überwacht werden.

Ein Stromabnehmer eines Stromschienensystem weist mehrere Leiter, typischer Kupferstreifen, in einer isolierten Verkleidung auf. Die Stromabnehmerschienen befinden sich innerhalb der Verkleidung, mit elektrischen Kabeln verbunden über eine Öffnung an der Unterseite der Verkleidung. Die untere Öffnung ist meist mit einem Neoprenstreifen verschlossen, um Fremdkörper und Dämpfe abzuhalten. Der Stromabnehmer wird von den Stromschienen geführt und muss nur mit einem Zugarm gezogen werden. Ein Kontaktblock ist diejenige Komponente des Stromabnehmers, welche den elektrischen Strom zwischen der stationären Stromschiene und dem sich bewegenden Stromabnehmer leitet. Der Kontaktblock weist eine Kohlebürste auf, die typischerweise einen oder mehrere Kohleblöcke aufweist und mit einem oder mehreren Widerständen oder Terminals ausgestattet ist.

Meist erfolgt eine zeitbasierte Wartung oder 'vorbeugende Instandhaltung' oder ein Betrieb bis hin zum Ausfall (reaktive Instandhaltung oder run to failure RTF approach). Dies bedingt jedoch häufig zusätzlich zur Systemausfallzeit noch weitere Beschädigungen des Fördersystems, da ein beschädigter Stromabnehmer die Stromschiene stärker beansprucht als ein intakter Stromabnehmer. Kommt es beispielsweise während der Fahrt zu einem Schleifleistenbruch, kann die Fahrleitung durch die nach oben drückende Trägerkonstruktion des Stromabnehmers heruntergerissen werden.

Für einzelne Kohleblöcke existiert eine Zustandsüberwachungstechnologie basierend auf einem eingebauten Draht. Der Draht ist isoliert von dem ihm umgebenden Material des Kohleblocks und agiert als Schalter: Nach einer gewissen Abnutzung ist der Draht durchgescheuert, was eine kritische Abnutzung anzeigt. Solche Kohleblöcke mit eingebauten Drähten sind jedoch teurer als herkömmliche und erfordern zusätzliche Hardware wie PLC Input. Daher werden meistens Kohlebürsten ohne Zustandsüberwachung und demzufolge ohne entsprechende Hardware eingesetzt.

Ebenfalls zur Zustandsüberwachung eingesetzt werden Wärmekameras oder manuelle Sichtinspektion um den Abnutzungszustand der Kohlebürsten zu ermitteln, wobei beide Methoden Personal zur Überwachung das Fördersystem während des Betriebs bzw. während der meist nächtlichen Ruhezeiten erfordern. Eine Sichtinspektion ist häufig aufgrund schwer erreichbarer und schwer einsehbarer Kohlebürsten und Stromschienen schwer durchführbar. Die schiere Anzahl an zu inspizierenden Kohlebürsten führt zudem mit sich, dass dies mit beträchtlichem Aufwand verbunden ist. Außerdem ist die Zuverlässigkeit der Inspektion abhängig von der Erfahrung des Inspektionspersonals und somit stark subjektiv.

Es gibt keine automatischen und kontinuierlichen Zustandsüberwachungssysteme, die zugleich den Zustand der Stromschienen und des Stromabnehmers überwachen. JP H03 261303 A offenbart ein System und ein Verfahren nach den Oberbegriffen der Ansprüchen 1 und 8.

Der vorliegenden Erfindung liegt daher die Aufgabe zugrunde, eine Verschleißerkennung während des Betriebs eines Fördersystems bereitzustellen, welche die oben beschriebenen Probleme löst. Diese Aufgabe wird durch die in den unabhängigen Ansprüchen beschriebenen Lösungen gelöst.

Die erfindungsgemäße Lösung sieht ein System zur Verschleißerkennung eines Fördersystems vor, insbesondere eines Flughafen-Gepäckfördersystems, das einen Gleitkontakt umfasst, welcher einen Stromabnehmer und einen stromführenden Leiter aufweist, wobei der Stromabnehmer an ein Fahrzeug montierbar ist und über den Stromabnehmer das Fahrzeug mit Energie versorgbar ist. Das System umfasst zudem einen stromabnehmerseitigen Schwingungssensor und ein Hintergrundsystem. Der stromabnehmerseitige Schwingungssensor ist ausgestaltet, an dem Stromabnehmer montiert durch eine Fahrbewegung des Fahrzeugs entlang dem stromführenden Leiter erzeugte Schwingungen zu registrieren und drahtlos an das Hintergrundsystem zu übermitteln. Das Hintergrundsystem ist ausgestaltet, an das Hintergrundsystem übermittelte Daten, insbesondere die registrierten Schwingungen, einer Analyse zu unterziehen und anhand dieser Analyse einen Verschleiß des Fördersystems, insbesondere des Stromabnehmers und/oder des stromführenden Leiters, zu signalisieren.

Auf diese Weise wird eine kritische Abnutzung des Stromabnehmers und/oder des stromführenden Leiters signalisiert. Nicht nur die Schwingungen, auch weitere Daten können einer Analyse unterzogen werden, so dass für das System auch weitere Fehler und nicht nur Abnutzung detektierbar ist. Ein drohender Ausfall wird so vorhergesagt. Eine Wartung des Fördersystems kann dann geplant werden und zudem nur dann durchgeführt werden, wenn sie tatsächlich notwendig ist, ohne dass es bereits zu einem Ausfall gekommen ist.

Stromabnehmer und stromführender Leiter eines Gleitkontakts weisen im Kontaktbereich Materialien unterschiedlicher Härte auf, wobei vorzugsweise das Material des Stromabnehmers ein weicheres Material ist als das Material des stromführenden Leiters.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Um die registrierten Schwingungen und Daten ortsauflösbar zu machen, kann das System zudem ein Ortungsmittel umfassen zur Übermittlung der Position des stromabnehmerseitigen Schwingungssensors an das Hintergrundsystem. Das Ortungsmittel kann stromabnehmerseitig (Ortserfassung durch Triangulation, GPS, ...) und/oder fix (Kamera, o.ä.) angeordnet sein.

Gemäß einer Ausführungsform kann das System zudem mindestens einen weiteren stationären Schwingungssensor umfassen, der an dem stromführenden Leiter befestigbar und ausgestaltet ist, durch den vorbeigeführten Stromabnehmer erzeugte Schwingungen zu registrieren und drahtlos an das Hintergrundsystem zu übermitteln.

Gemäß einer weiteren Ausführungsform kann der stromführende Leiter eine Stromschiene und/oder der Stromabnehmer eine Kohlebürste sein. Eine Stromschiene kann aus mehreren Stromschienenabschnitten zusammengesetzt sein und somit Verbindungsstellen aufweisen, wobei Unregelmäßigkeiten der Verbindungsstellen von einem Schwingungssensor erfassbar sind.

Gemäß einer weiteren Ausführungsform kann das System zudem ein Gateway zur Übermittlung erfasster Daten von den Schwingungssensoren zum Hintergrundsystem umfassen. Das Gateway kann hierzu an einem festen Ort entlang dem stromführenden Leiter installiert sein und bei jeder Überfahrt eines einen Schwingungssensors aufweisenden Fahrwerks eine Nullzeit setzen.

Um einen umfassenderen Überblick über den Zustand des Fördersystems zu erhalten, können die Schwingungssensoren ausgestaltet sein, zusätzlichen zu den registrierten Schwingungen Zustandsdaten des Schwingungssensors an das Hintergrundsystem zu übermitteln. So können die Zustandsdaten eines jeden Schwingungssensors eine verbleibende Batteriekapazität und seine Temperatur und andere für das jeweilige Fördersystem relevante Zustandsdaten enthalten. Bei Unterschreiten einer festgelegten Batteriekapazität oder bei Überschreiten einer bestimmten Temperatur kann das System ausgestaltet sein, eine Meldung abzusetzen.

Der Stromabnehmer kann gemäß einer weiteren Ausführungsform eine Feder aufweisen, welche ausgestaltet ist, den Stromabnehmer an den stromführenden Leiter zu drücken. Bei dieser typischen Ausführung eines Stromabnehmers sind Veränderungen des Schwingungsmusters bei Abnutzung besonders gut detektierbar.

Hinsichtlich eines Verfahrens wird die vorstehend genannte Aufgabe gelöst durch ein Verfahren zur Verschleißerkennung beim Betrieb eines Fördersystems, insbesondere eines Flughafen-Gepäckfördersystems, das einen Gleitkontakt umfasst, welcher einen Stromabnehmer und einen stromführenden Leiter aufweist, wobei der Stromabnehmer an ein Fahrzeug montierbar ist und über den Stromabnehmer das Fahrzeug mit Energie versorgbar ist. Das Verfahren umfasst die Verfahrensschritte:
a) Bewegen des Stromabnehmers entlang dem stromführenden Leiter, wodurch diese in Schwingungen versetzt werden.
b) Registrieren der Schwingungen durch einen an dem Stromabnehmer befestigten stromabnehmerseitigen Schwingungssensor.
c) Drahtloses Übermitteln der registrierten Schwingungen von dem stromabnehmerseitigen Schwingungssensor zusammen mit einem Zeitstempel und einer Identität des Schwingungssensors an ein Hintergrundsystem.
d) Im Hintergrundsystem werden an das Hintergrundsystem übermittelte Daten, insbesondere die registrierten Schwingungen,
einer Analyse unterzogen und bei Abweichungen als Verschleiß des Fördersystems, insbesondere des Stromabnehmers und/oder des stromführenden Leiters, erkannt und signalisiert.

Gemäß einer weiteren Ausführungsform kann das Verfahren zudem die Verfahrensschritte umfassen:
e) Registrieren der durch den vorbeigeführten Stromabnehmer an dem stromführenden Leiter erzeugten Schwingungen von einem weiteren stationären Schwingungssensor.
f) Übermitteln der von dem stationären Schwingungssensor registrierten Schwingungen zusammen mit einer Identität des stationären Schwingungssensors drahtlos an das Hintergrundsystem.
g) Durchführen des oben Verfahrensschrittes d) für die im Verfahrensschritt f) übermittelten Daten.

Die Schwingungssensoren können zudem weitere Zustandsdaten des Schwingungssensors übermitteln. Das Resultat der Analyse kann mit einer Meldung signalisiert werden.

Gemäß einer weiteren Ausführungsform kann das Übermitteln der Daten von dem Schwingungssensor zum Hintergrundsystem über ein Gateway erfolgen, wobei das Gateway an einem festen Ort entlang dem stromführenden Leiter installiert ist. Für eine einfache Analyse kann bei jeder Überfahrt eines einen Schwingungssensors aufweisenden Fahrwerks eine Nullzeit gesetzt werden.

Die Abweichungen können gemäß einer weiteren Ausführungsform durch einen statistischen Vergleich mit vorangehenden Registrierungen oder durch einen Vergleich mit einer fixen Größe erkannt werden.

Gemäß einer weiteren Ausführungsform kann ein Übermitteln von Zustandsdaten eines jeden Schwingungssensors an das Hintergrundsystem zusätzlich zu den registrierten Schwingungen erfolgen.

Gemäß einer weiteren Ausführungsform kann ein Übermitteln einer Position des stromabnehmerseitigen Schwingungssensors an das Hintergrundsystem.

Gemäß einer weiteren Ausführungsform kann der Stromabnehmer eine Feder aufweisen, welche ausgestaltet ist, den Stromabnehmer an den stromführenden Leiter zu drücken, so dass der Stromabnehmer während einer Fahrbewegung entlang dem stromführenden Leiter an den stromführenden Leiter gedrückt und so ein konstanter Kontakt sicher gestellt wird.

Gemäß einer weiteren Ausführungsform kann der stromführende Leiter eine Stromschiene und/oder der Stromabnehmer eine Kohlebürste sein.

Gemäß einer Ausführungsform umfasst das erfindungsgemäße System sämtliche Mittel zur Durchführung des erfindungsgemäßen Verfahrens.

Ausführungsformen der Erfindung werden nachfolgend anhand der Figuren beispielsweise näher erläutert. Dabei zeigen:
- Figur 1: schematisch das erfindungsgemäße System;
- Figur 2: stationäre und stromabnehmerseitige Schwingungssensoren auf einem Fahrzeug und den Stromschienen;
- Figur 3: einen Gleitkontakt eines Stromschienensystems samt Kontaktblock; und
- Figur 4: illustriert eine unterschiedliche Abnutzung zweier Federn aufweisender Kontaktblöcke.

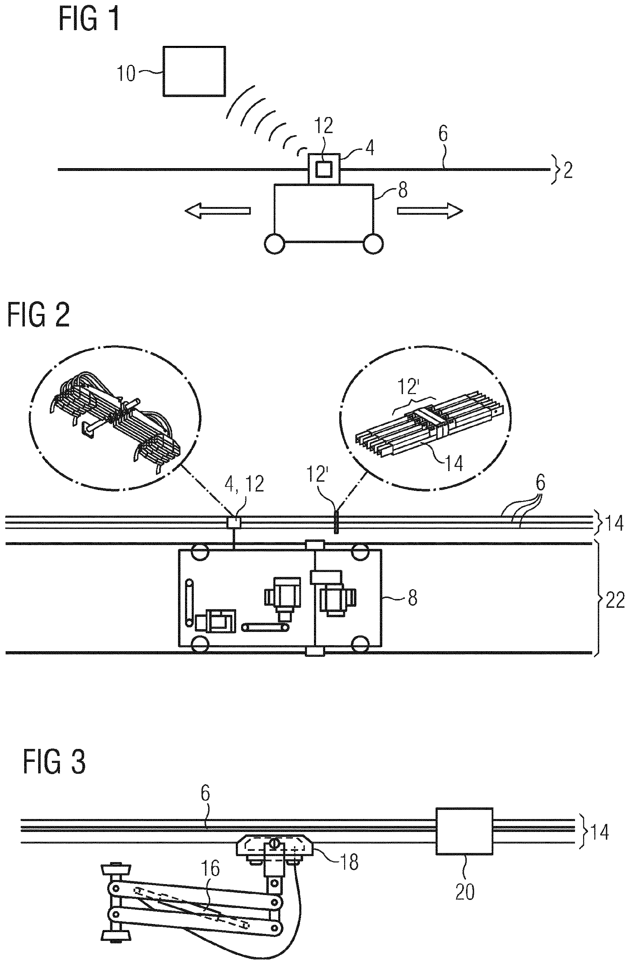

Figur 1 zeigt schematisch das erfindungsgemäße System zur Verschleißerkennung in einer reduzierten Ausführungsform. Der Gleitkontakt umfasst einen stromführenden Leiter 6 und einen Stromabnehmer 4, welcher auf einem Fahrzeug 8 befestigt ist. Über den Stromabnehmer 4 ist das Fahrzeug 8 mit Energie versorgbar. Der stromführende Leiter 6 kann unterhalb, neben und/oder oberhalb des Fahrzeugs 8 angeordnet sein. Ein Schwingungssensor 12 ist an dem Stromabnehmer 4 und somit an dem Fahrzeug 8 befestigt und das Fahrzeug 8 ist mindestens entlang dem stromführenden Leiter 6 bewegbar. Das System umfasst zudem ein Hintergrundsystem 10. Das Fahrzeug 8 fährt samt stromabnehmerseitigem Schwingungssensor 12 entlang dem stromführenden Leiter 6, wobei der Stromabnehmer 4 an den stromführenden Leiter 6 gepresst wird. Die bei der Fahrbewegung erzeugten Schwingungen werden von dem stromabnehmerseitigen Schwingungssensor 12 registriert und drahtlos an Hintergrundsystem 10 übermittelt. Das Hintergrundsystem 10 analysiert die registrierten Schwingungen und allfällige weitere von dem Schwingungssensor 12 und/oder weiteren Sensoren erfasste Daten, analysiert diese und setzt bei auffälliger Analyse eine Meldung ab. Wenn der stromabnehmerseitige Schwingungssensor 12 zudem ein Ortungsmittel zur Übermittlung der Position des stromabnehmerseitigen Schwingungssensors 12 an das Hintergrundsystem 10 umfasst, kann der Ort der Störung besonders einfach analysiert werden.

Die weiteren vom Schwingungssensor 12 übermittelten Daten sind von den Anforderungen des jeweiligen Fördersystems abhängig. Häufig sinnvoll ist in regelmäßigen Abständen oder kontinuierlich eine Erfassung und Übermittlung von Temperatur und verbleibender Batteriekapazität des Schwingungssensors 12.

Das Schwingungsmuster hängt nicht nur vom Zustand des Stromabnehmers 4, sondern hängt auch ab vom Zustand des stromführenden Leiters 6 und des Fördersystems. Den größten Einfluss auf das Schwingungsmuster haben jedoch der Zustand des Stromabnehmers 4 und des stromführenden Leiters 6. Das von einem neuen Gleitkontakt ohne Ausrichtungsfehler oder sonstige Probleme gemessene Schwingungsmuster ist entlang dem gesamten stromführenden Leiter 6 relativ konsistent. Nach einiger Zeit durch Abnutzung oder wenn eine andere Störung (z.B. eine durchgebrannte Stromschiene, eine falsch ausgerichtete Weiche oder eine fehlerhaft ausgerichtete Verbindung zwischen zwei Stromschienenabschnitten, ...) auftritt, wird eine Änderung des Schwingungsmusters am Standort dieser Störung wahrgenommen.

Das Stromschienensystem selbst kann einige Hundertmeter lang sein, gebaut mit Hilfe von verbundenen Stromschienenabschnitten. Die Verbindungsstellen können falsch ausgerichtet sein, und Abschnitte können mit Verbrennungen zerfressen oder markiert werden, die alle zu einer gesteigerten Abnutzung der Kohlebürste führen können.

Es gibt eine Beziehung zwischen der von der Feder 16 auf die Kohlebürste 18 ausgeübten Kraft und dem Schwingungsmuster. Mit zunehmender Abnutzung reduziert sich die Kraft der Feder 16' auf die Kohlebürste 18'. Dies ist im Schwingungsmuster ersichtlich.

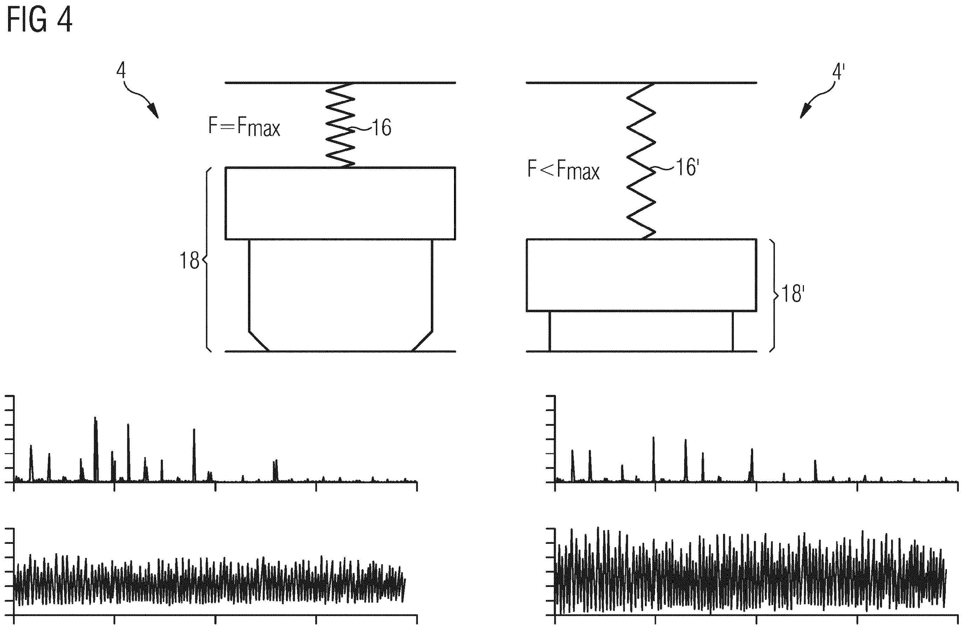

Figur 4 zeigt Unterschiede im Schwingungsmuster eines neuen Stromabnehmers 4 mit neuem, nicht abgetragenem Kohleblock einer Kohlebürste 18 und gespannter Feder 16 (links) und eines Stromabnehmers 4' gegen Ende seiner Lebensdauer mit abgetragenem Kohleblock einer Kohlebürste 18' und gedehnter Feder 16' (rechts). Die Feder 16 presst wie in Figur 3 gezeigt den Stromabnehmer 4 gegen die stromführenden Leiter 6 der Stromschiene 14, die wiederum von einer Stromschienenverbindung 20 mit Strom versorgt werden, und stellt so den elektrischen Kontakt während der Fahrbewegung des Fahrzeugs 8 sicher. Eine typische Anordnung von Fahrzeug 8 auf seiner Fahrbahn 22 und Stromabnehmer 4 samt stromabnehmerseitigem Schwingungssensor 12 und stationärem Schwingungssensor 12' entlang einer mehrere stromführende Leiter 6 aufweisenden Sammelschiene 14 ist in Figur 2 dargestellt.

Der Kontaktblock ist der Teil eines Stromabnehmers 4, welcher Strom zwischen der stationären Stromschiene 14 bzw. den stromführenden Leitern 6 und dem bewegten Stromabnehmer 4 leitet. Der Kontaktblock umfasst eine Kohlebürste, die typischerweise einen oder mehrere individuelle Kohleblöcke mit einem oder mehreren Anschlüssen (Shunts, Terminals) aufweist.

Während einer Bewegung des Stromabnehmers 4 werden die Schwingungen ständig von dem Schwingungssensor 12 gemessen. Das Schwingungsmuster von einer neuen Kohlebürste (Figur 4 links) und eine Kohlebürste, die sich ihrem Lebensende nähert (Figur 4 rechts), können in einer Analyse miteinander verglichen werden. Der Unterschied wird verwendet, um das Lebensende der Kohlebürste des Stromabnehmers 4 vorherzusagen.

Um ein noch umfassenderes Abbild des Gesamtzustands zu erhalten, kann wie in Figur 2 dargestellt zudem ein stationärer Schwingungssensor 12' auf der Stromsammelschiene 14 installiert sein. Figur 2 zeigt ebenfalls im Detail, wie der stromabnehmerseitige Schwingungssensor 12 auf dem Stromabnehmer 4 angeordnet ist, um einzeln Schwingungen von allen Kohleblöcken des Stromabnehmers 4 und von allen Leitern der Stromsammelschiene 14 zu detektieren. Die erfassten Schwingungen der Schwingungssensoren 12, 12' werden drahtlos an das Hintergrundsystem 10 übermittelt und einer Analyse unterzogen.

Der stromabnehmerseitige Schwingungssensor 12 misst auf dem Stromabnehmer 4 montiert stetig das während der Fahrt generierte Schwingungsmuster. Dieses Schwingungsmuster wird zurück zu einer festen Position entlang der Stromschiene gemappt mit einem Trigger/Gateway Sensor um die Position des Stromabnehmers 4 während jedem Messintervall zu bestimmen. Dieser Trigger/Gateway Sensor agiert als Ortungsmittel. Das Ortungsmittel übermittelt die Position des stromabnehmerseitigen Schwingungssensors 12 und somit des Stromabnehmers 4 an das Hintergrundsystem 10.

Der stromabnehmerseitige Schwingungssensor 12 kann als mitfahrender Sensor Probleme und Zustand des Stromabnehmers 4 und des stromführenden Leiters 6 detektieren, insbesondere relevant ist Abnutzung. Um nur oder zusätzlich Probleme auf dem stromführenden Leiter 6, aber auch auf der normalen Fahrbahn 22 des Fahrzeugs 8 zu detektieren, wird ein stationärer Schwingungssensor 12 zur ergänzenden Analyse herangezogen.

Gemäß einer Ausführungsform wird das erfindungsgemäße System von einem SCADA-System überwacht und von diesem umfasst, ist somit in das SCADA-System integriert.

### Bezugszeichenliste

- 2: Gleitkontakt
- 4: Stromabnehmer
- 6: stromführender Leiter
- 8: Fahrzeug
- 10: Hintergrundsystem
- 12: Schwingungssensor
- 14: Sammelschiene (bus bar)
- 16: Feder
- 18: Kohlebürste (carbon brush)
- 20: Stromschienenverbindung
- 22: Fahrbahn

## Patentansprüche

1. System zur Verschleißerkennung eines Fördersystems, insbesondere eines Flughafen-Gepäckfördersystems, das einen Gleitkontakt (2) umfasst, welcher einen Stromabnehmer (4) und einen stromführenden Leiter (6) aufweist, wobei der Stromabnehmer (4) an ein Fahrzeug (8) montierbar ist und über den Stromabnehmer (4) das Fahrzeug (8) mit Energie versorgbar ist, zudem umfassend einen stromabnehmerseitigen Schwingungssensor (12) und ein Hintergrundsystem (10), **dadurch gekennzeichnet, dass**
- der stromabnehmerseitige Schwingungssensor (12) ausgestaltet ist, an dem Stromabnehmer (4) montiert durch eine Fahrbewegung des Fahrzeugs (8) entlang dem stromführenden Leiter (6) erzeugte Schwingungen zu registrieren und drahtlos an das Hintergrundsystem (10) zu übermitteln; und
- das Hintergrundsystem (10) ausgestaltet ist, an das Hintergrundsystem (10) übermittelten Daten, insbesondere die registrierten Schwingungen, einer Analyse zu unterziehen und anhand dieser Analyse einen Verschleiß des Fördersystems, insbesondere des Stromabnehmers (4) und/oder des stromführenden Leiters (6), zu signalisieren.

2. System nach Anspruch 1, zudem umfassend
ein Ortungsmittel zur Übermittlung der Position des stromabnehmerseitigen Schwingungssensors (12) an das Hintergrundsystem (10).

3. System nach einem der Ansprüche 1 bis 2, zudem umfassend mindestens einen weiteren stationären Schwingungssensor (12), der an dem stromführenden Leiter (6) befestigbar und ausgestaltet ist, durch den vorbeigeführten Stromabnehmer (4) erzeugte Schwingungen zu registrieren und drahtlos an das Hintergrundsystem (10) zu übermitteln.

4. System nach einem der Ansprüche 1 bis 3, **dadurch gekennzeichnet, dass**
der stromführende Leiter (6) eine Stromschiene und/oder der Stromabnehmer (4) eine Kohlebürste (18) ist.

5. System nach einem der Ansprüche 1 bis 4, zudem umfassend ein Gateway zur Übermittlung erfasster Daten von den Schwingungssensoren (12) zum Hintergrundsystem (10).

6. System nach einem der Ansprüche 1 bis 5, **dadurch gekennzeichnet, dass**
die Schwingungssensoren (12) ausgestaltet sind, zusätzlichen zu den registrierten Schwingungen Zustandsdaten des Schwingungssensors (12) an das Hintergrundsystem (10) zu übermitteln.

7. System nach einem der Ansprüche 1 bis 6, **dadurch gekennzeichnet, dass**
der Stromabnehmer (4) eine Feder (16) aufweist, welche ausgestaltet ist, den Stromabnehmer (4) an den stromführenden Leiter (6) zu drücken.

8. Verfahren zur Verschleißerkennung beim Betrieb eines Fördersystems, insbesondere eines Flughafen-Gepäckfördersystems, das einen Gleitkontakt (2) umfasst, welcher einen Stromabnehmer (4) und einen stromführenden Leiter (6) aufweist, wobei der Stromabnehmer (4) an ein Fahrzeug (8) montierbar ist und über den Stromabnehmer (4) das Fahrzeug (8) mit Energie versorgbar ist,
umfassend die Verfahrensschritte:
a) Bewegen des Stromabnehmers (4) entlang dem stromführenden Leiter (6), wodurch diese in Schwingungen versetzt werden;
b) Registrieren der Schwingungen durch einen an dem Stromabnehmer (4) befestigten stromabnehmerseitigen Schwingungssensor (12); **gekennzeichnet durch** die Schritte:
c) drahtloses Übermitteln der registrierten Schwingungen von dem stromabnehmerseitigen Schwingungssensor (12) zusammen mit einem Zeitstempel und einer Identität des Schwingungssensors (12) an ein Hintergrundsystem (10);
d) im Hintergrundsystem (10) werden an das Hintergrundsystem (10) übermittelte Daten, insbesondere die registrierten Schwingungen, einer Analyse unterzogen und bei Abweichungen als Verschleiß des Fördersystems, insbesondere des Stromabnehmers (4) und/oder des stromführenden Leiters (6), erkannt und signalisiert.

9. Verfahren nach Anspruch 8, zudem umfassend die Verfahrensschritte:
e) Registrieren der durch den vorbeigeführten Stromabnehmer (4) an dem stromführenden Leiter (6) erzeugten Schwingungen von einem weiteren stationären Schwingungssensor (12);
f) Übermitteln der von dem stationären Schwingungssensor (12) registrierten Schwingungen zusammen mit einer Identität des stationären Schwingungssensors (12) drahtlos an das Hintergrundsystem (10);
g) Durchführen des Verfahrensschrittes d) von Anspruch 8 für die im Verfahrensschritt f) übermittelten Daten.

10. Verfahren nach Anspruch 8 oder 9, **dadurch gekennzeichnet, dass**
das Übermitteln der Daten von dem Schwingungssensor (12) zum Hintergrundsystem (10) über ein Gateway erfolgt, wobei das Gateway an einem festen Ort entlang dem stromführenden Leiter (6) installiert ist.

11. Verfahren nach einem der Ansprüche 8 bis 10, **dadurch gekennzeichnet, dass**
die Abweichungen durch einen statistischen Vergleich mit vorangehenden Registrierungen oder durch einen Vergleich mit einer fixen Größe erkannt werden.

12. Verfahren nach einem der Ansprüche 8 bis 10, **gekennzeichnet durch**
Übermitteln von Zustandsdaten eines jeden Schwingungssensors (12) an das Hintergrundsystem (10) zusätzlich zu den registrierten Schwingungen.

13. Verfahren nach einem der Ansprüche 8 bis 12, **gekennzeichnet durch** den Verfahrensschritt
Übermitteln einer Position des stromabnehmerseitigen Schwingungssensors (12) an das Hintergrundsystem (10).

14. Verfahren nach einem der Ansprüche 8 bis 13, **dadurch gekennzeichnet, dass**
der Stromabnehmer (4) eine Feder (16) aufweist, welche ausgestaltet ist, den Stromabnehmer (4) an den stromführenden Leiter (6) zu drücken.

15. Verfahren nach einem der Ansprüche 8 bis 14, **dadurch gekennzeichnet, dass**
der stromführende Leiter (6) eine Stromschiene und/oder der Stromabnehmer (4) eine Kohlebürste (18) ist.

## Claims

1. System for detecting wear of a conveying system, in particular of an airport baggage conveying system, comprising a sliding contact (2) which has a current collector (4) and a current-carrying conductor (6), wherein the current collector (4) can be mounted on a vehicle (8) and the vehicle (8) can be supplied with energy via the current collector (4), in addition comprising a vibration sensor (12) on the current collector side and a background system (10), **characterised in that**
- the vibration sensor (12) on the current collector side, mounted on the current collector (4), is designed to register vibrations produced by driving motion of the vehicle (8) along the current-carrying conductor (6) and to wirelessly transmit said vibrations to the background system (10); and
- the background system (10) is designed to subject data transmitted to the background system (10), in particular the registered vibrations, to an analysis and to signal wear of the conveying system, in particular of the current collector (4) and/or of the current-carrying conductor (6), on the basis of this analysis.

2. System according to claim 1, also comprising a locating means for transmitting the position of the vibration sensor (12) on the current collector side to the background system (10).

3. System according to one of claims 1 to 2, also comprising at least one further stationary vibration sensor (12) which can be attached to the current-carrying conductor (6) and is designed to register vibrations produced by the passing current collector (4) and to wirelessly transmit said vibrations to the background system (10).

4. System according to one of claims 1 to 3, **characterised in that**
the current-carrying conductor (6) is a busbar and/or the current collector (4) is a carbon brush (18).

5. System according to one of claims 1 to 4, also comprising a gateway for transmitting recorded data from the vibration sensors (12) to the background system (10).

6. System according to one of claims 1 to 5, **characterised in that**
the vibration sensors (12) are designed to transmit status data of the vibration sensor (12) to the background system (10) in addition to the registered vibrations.

7. System according to one of claims 1 to 6, **characterised in that**
the current collector (4) has a spring (16) which is designed to press the current collector (4) against the current-carrying conductor (6).

8. Method for detecting wear during the operation of a conveying system, in particular of an airport baggage conveying system, comprising a sliding contact (2) which has a current collector (4) and a current-carrying conductor (6), wherein the current collector (4) can be mounted on a vehicle (8) and the vehicle (8) can be supplied with energy via the current collector (4),
comprising the method steps:
a) movement of the current collector (4) along the current-carrying conductor (6), causing it to vibrate;
b) registration of the vibrations by a vibration sensor (12) attached to the current collector (4) on the current collector side; **characterised by** the steps:
c) wireless transmission of the registered vibrations from the vibration sensor (12) on the current collector side together with a timestamp and an identity of the vibration sensor (12) to a background system (10);
d) in the background system (10), data transmitted to the background system (10), in particular the registered vibrations, is subjected to an analysis and, in the event of deviations, detected and signalled as wear of the conveying system, in particular of the current collector (4) and/or of the current-carrying conductor (6).

9. Method according to claim 8, also comprising the method steps:
e) registration of the vibrations produced by the passing current collector (4) on the current-carrying conductor (6) by a further stationary vibration sensor (12);
f) wireless transmission of the vibrations registered by the stationary vibration sensor (12) together with an identity of the stationary vibration sensor (12) to the background system (10) ;
g) performance of the method step d) from claim 8 for the data transmitted in the method step f).

10. Method according to claim 8 or 9, **characterised in that** the data is transmitted from the vibration sensor (12) to the background system (10) via a gateway, wherein the gateway is installed at a fixed location along the current-carrying conductor (6).

11. Method according to one of claims 8 to 10, **characterised in that**
the deviations can be detected by means of a statistical comparison with preceding registrations or by means of a comparison with a fixed variable.

12. Method according to one of claims 8 to 10, **characterised by**
transmission of status data of each vibration sensor (12) to the background system (10) in addition to the registered vibrations.

13. Method according to one of claims 8 to 12, **characterised by** the method step
transmission of a position of the vibration sensor (12) on the current collector side to the background system (10).

14. Method according to one of claims 8 to 13, **characterised in that**
the current collector (4) has a spring (16) which is designed to press the current collector (4) against the current-carrying conductor (6).

15. Method according to one of claims 8 to 14, **characterised in that**
the current-carrying conductor (6) is a busbar and/or the current collector (4) is a carbon brush (18).

## Revendications

1. Système pour la détection de l'usure d'un système de transport, en particulier d'un système de transport de bagages d'aéroport, qui comporte un contact glissant (2), lequel comprend un collecteur de courant (4) et un conducteur (6) parcouru par le courant, dans lequel le collecteur de courant (4) est montable sur un véhicule (8) et le véhicule (8) peut être alimenté en énergie par l'intermédiaire du collecteur de courant (4), comportant en outre un capteur de vibration (12) côté collecteur de courant et un système d'arrière-plan (10), **caractérisé en ce que**
- le capteur de vibration (12) côté collecteur de courant est conçu pour, à l'état monté sur le collecteur de courant (4), enregistrer et transmettre sans fil au système d'arrière-plan (10) des vibrations produites par un mouvement de déplacement du véhicule (8) le long du conducteur (6) parcouru par le courant ; et
- le système d'arrière-plan (10) est conçu pour soumettre à une analyse des données transmises au système d'arrière-plan (10), en particulier les vibrations enregistrées, et, à l'aide de cette analyse, pour signaler une usure du système de transport, en particulier du collecteur de courant (4) et/ou du conducteur (6) parcouru par le courant.

2. Système selon la revendication 1, comportant en outre un moyen de localisation pour la transmission de la position du capteur de vibration (12) côté collecteur de courant au système d'arrière-plan (10).

3. Système selon l'une des revendications 1 à 2, comportant en outre au moins un autre capteur de vibration (12) stationnaire, qui peut être fixé au conducteur (6) parcouru par le courant et est conçu pour enregistrer et transmettre sans fil au système d'arrière-plan (10) des vibrations produites par le collecteur de courant (4) en défilement.

4. Système selon l'une des revendications 1 à 3, **caractérisé en ce que**
le conducteur (6) parcouru par le courant est un rail conducteur et/ou le collecteur de courant (4) est un balai de charbon (18).

5. Système selon l'une des revendications 1 à 4, comportant en outre une passerelle pour la transmission de données captées par les capteurs de vibration (12) au système d'arrière-plan (10) .

6. Système selon l'une des revendications 1 à 5, **caractérisé en ce que**
les capteurs de vibration (12) sont conçus pour transmettre au système d'arrière-plan (10), en plus des vibrations enregistrées, des données d'état du capteur de vibration (12).

7. Système selon l'une des revendications 1 à 6, **caractérisé en ce que**
le collecteur de courant (4) comprend un ressort (16), lequel est conçu pour presser le collecteur de courant (4) contre le conducteur (6) parcouru par le courant.

8. Procédé pour la détection de l'usure lors du fonctionnement d'un système de transport, en particulier d'un système de transport de bagages d'aéroport, qui comporte un contact glissant (2), lequel comprend un collecteur de courant (4) et un conducteur (6) parcouru par le courant, dans lequel le collecteur de courant (4) est montable sur un véhicule (8) et le véhicule (8) peut être alimenté en énergie par l'intermédiaire du collecteur de courant (4),
comportant les étapes de procédé suivantes :
a) déplacement du collecteur de courant (4) le long du conducteur (6) parcouru par le courant, de sorte que celui-ci est mis en vibration ;
b) enregistrement des vibrations au moyen d'un capteur de vibration (12) côté collecteur de courant fixé sur le collecteur de courant (4) ; **caractérisé par** les étapes suivantes :
c) transmission sans fil des vibrations enregistrées par le capteur de vibration (12) côté collecteur de courant conjointement avec un horodatage et une identité du capteur de vibration (12) à un système d'arrièreplan (10) ;
d) dans le système d'arrière-plan (10), des données transmises au système d'arrière-plan (10), en particulier les vibrations enregistrées, sont soumises à une analyse et, en cas d'écarts, détectées et signalées en tant qu'usure du système de transport, en particulier du collecteur de courant (4) et/ou du conducteur (6) parcouru par le courant.

9. Procédé selon la revendication 8, comportant en outre les étapes de procédé suivantes :
e) enregistrement des vibrations produites par le collecteur de courant (4) en défilement au niveau du conducteur (6) parcouru par le courant par un autre capteur de vibration (12) stationnaire ;
f) transmission sans fil au système d'arrière-plan (10) des vibrations enregistrées par le capteur de vibration (12) stationnaire conjointement avec une identité du capteur de vibration (12) stationnaire ;
g) mise en œuvre de l'étape de procédé d) selon la revendication 8 pour les données transmises dans l'étape de procédé f).

10. Procédé selon la revendication 8 ou 9, **caractérisé en ce que** la transmission des données par le capteur de vibration (12) au système d'arrière-plan (10) s'effectue par l'intermédiaire d'une passerelle, dans lequel la passerelle est installée en un emplacement fixe le long du conducteur (6) parcouru par le courant.

11. Procédé selon l'une des revendications 8 à 10, **caractérisé en ce que**
les écarts sont détectés au moyen d'une comparaison statistique avec des enregistrements précédents ou au moyen d'une comparaison avec une grandeur fixe.

12. Procédé selon l'une des revendications 8 à 10, **caractérisé par**
la transmission de données d'état de chaque capteur de vibration (12) au système d'arrière-plan (10) en plus des vibrations enregistrées.

13. Procédé selon l'une des revendications 8 à 12, **caractérisé par** l'étape de procédé suivante :
transmission d'une position du capteur de vibration (12) côté collecteur de courant au système d'arrière-plan (10).

14. Procédé selon l'une des revendications 8 à 13, **caractérisé en ce que**
le collecteur de courant (4) comprend un ressort (16), lequel est conçu pour presser le collecteur de courant (4) contre le conducteur (6) parcouru par le courant.

15. Procédé selon l'une des revendications 8 à 14, **caractérisé en ce que**
le conducteur (6) parcouru par le courant est un rail conducteur et/ou le collecteur de courant (4) est un balai de charbon (18).
